# FASCICULE DE BREVET EUROPEEN

(11) **EP 2 523 036 B1**
(45) Date de publication et mention de la délivrance du brevet: **17.04.2019**
(21) Numéro de dépôt: 11165562.7
(22) Date de dépôt: 10.05.2011
(51) Int. Cl.: G02B 27/28, G02B 1/11, G02B 5/30, G02B 5/18

(54) **Dispositif optique comprenant au moins un polariseur avec une structure sub-micrométrique anti-réfléchissante**
Optische Vorrichtung mit einem Polarisator mit antireflektiver sub-Mikrometer Struktur
Optical device comprising polarizer with sub-micron anti-reflective structure

(43) Date de publication de la demande: 14.11.2012
(73) Titulaire: CSEM Centre Suisse d'Electronique et de Microtechnique SA - Recherche et Développement, 2002 Neuchâtel (CH)
(72) Inventeur: Schnieper, Marc, 1213 Onex-Genève (CH)
(74) Mandataire: P&TS SA (AG, Ltd.)

(56) Documents cités:
- JP-A- 2003 302 532
- US-A- 4 413 915
- US-A1- 2008 085 381
- US-A1- 2010 291 317

## Description

### Domaine technique

La présente invention se rapporte au domaine de l'optique. Elle concerne, plus particulièrement, un système comportant un premier et un deuxième polariseurs, agencés pour pouvoir évoluer entre un premier état dans lequel les directions de polarisation des premier et deuxième polariseurs sont parallèles et un deuxième état dans lequel les directions de polarisation des premier et deuxième polariseurs sont perpendiculaires.

### Etat de la technique

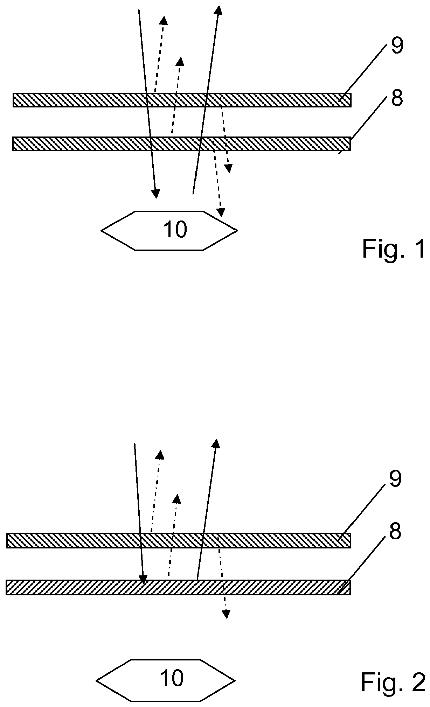

Ce genre de système polarisant est bien connu de l'homme du métier. Il permet de rendre visible ou de masquer un objet disposé derrière le système polarisant. En effet, lorsqu'un premier 8 et un deuxième 9 polariseurs sont dans leur premier état, illustré sur la figure 1, ils laissent passer la lumière incidente et la lumière réfléchie, laissant voir un objet 10 situé derrière le système polarisant. Les hachures des polariseurs symbolisent le fait que leur direction de polarisation est parallèle. Lorsque les polariseurs sont dans leur deuxième état, ils ne laissent pas passer la lumière incidente jusqu'à l'objet, ce dernier étant alors masqué, comme représenté sur la figure 2. Sur cette figure, le polariseur 9 dont l'orientation a été modifiée, présente des hachures dont l'orientation est inversée par rapport au polariseur 8, afin de symboliser les orientations perpendiculaires de leur direction de polarisation. Il est évident que l'un ou l'autre, voire les deux polariseurs peuvent être mobiles.

Un problème récurrent avec ce genre de système polarisant est la perte de lumière due aux absorptions et réflexions parasites survenant à chaque fois que la lumière rencontre une interface, c'est-à-dire lors de chaque passage d'un polariseur (à l'aller et au retour), mais aussi au niveau de l'objet lui-même. L'objet apparaît donc sombre et n'est pas mis en valeur. Sur les figures 1 et 2, les pertes sont représentées par les flèches en pointillés, tandis que la lumière incidente et la lumière réfléchie par l'objet sont représentées par les flèches en trait continu.

En général, cet inconvénient est compensé par l'ajout d'un rétro-éclairage, comme dans le cas des affichages à cristaux liquides (LCD).

Toutefois, dans certaines applications, il n'est pas possible d'ajouter une source de lumière au niveau de l'objet. C'est par exemple le cas lorsque le système polarisant ferme un boitier, qui ne contient aucune source d'énergie électrique. Seule la lumière externe pourra être utilisée come éclairage. Cette lumière externe va donc effectuer un trajet aller-retour, traverser une première fois les deux polariseurs (dans leur premier état) pour être réfléchie par l'objet 10 et passer à nouveau au travers des deux polariseurs, pour qu'un observateur puisse voir l'objet 10 dans le boitier, au travers du système polarisant.

Dans une telle configuration, les pertes de lumière constatées avec les polariseurs de l'état de la technique ne donnent pas satisfaction, particulièrement lorsque l'objet à montrer comporte des détails de grande qualité. Avec les systèmes actuels, les pertes de lumière sont de l'ordre de 32%. Les documents JP2003302532 A et US4413915 A divulguent l'état de la technique antérieure.

La présente invention a pour but de résoudre ce problème. Divulgation de l'invention

Pour y parvenir et de façon plus précise, l'invention concerne un dispositif optique et un procédé de réalisation, tels que proposé dans les revendications.

### Brève description des dessins

D'autres détails de l'invention apparaîtront plus clairement à la lecture de la description qui suit, faite en référence au dessin annexé dans lequel :
- les figures 3 et 4 illustrent schématiquement un dispositif selon l'invention, et
- la figure 5 illustre un procédé de réalisation permettant d'aboutir à l'invention.

### Mode(s) de réalisation de l'invention

Ainsi, afin d'obtenir un dispositif optique polarisant générant un minimum de pertes de lumière, le dispositif selon l'invention comprend un premier 8 et un deuxième 9 polariseurs, agencés pour pouvoir évoluer entre un premier état dans lequel les directions de polarisation des premier et deuxième polariseurs sont parallèles et un deuxième état dans lequel les directions de polarisation des premier et deuxième polariseurs sont perpendiculaires. Le dispositif permettant de déplacer les polariseurs l'un en référence à l'autre ne fait pas partie de l'invention. Différentes solutions existent dans l'état de la technique et l'homme du métier pourra choisir celle qui convient à l'application visée.

Chaque polariseur 8, 9 est formé d'une feuille réalisée en polymère. Cette feuille polymère est disposée sur un substrat 12 par exemple en quartz (fused silica). On peut également utiliser tout autre matériau présentant un indice de réfraction inférieur à celui du saphir. A titre d'exemple, le quartz présente un indice de réfraction bas (n_{quartz} = 1.45, à comparer avec le saphir, généralement utilisé en horlogerie pour ses bonnes qualités mécanique nₛₐₚₕᵢᵣ = 1.77). Ainsi, pour la lumière incidente du côté du quartz, les pertes en réflexion sont effectivement limitées. Avec un substrat en saphir, on a des pertes en réflexion de l'ordre de 15%, tandis que les pertes ne sont que de 6.8% avec un substrat en quartz. Cette amélioration est réalisée deux fois par plaque, à chaque interface, soit quatre fois pour un système comprenant deux polariseurs disposés chacun sur une plaque.

Ainsi, en utilisant un substrat 12 en quartz, les pertes sont fortement réduites au niveau d'un premier côté du polariseur. Afin de réduire également les pertes pour l'autre face, c'est-à-dire directement au niveau de la feuille constituant le polariseur, on rend la surface de ce polariseur moins réfléchissante.

On réalise une structure sub-micrométrique anti-réfléchissante directement dans la surface du polymère du polariseur, plus précisément du côté de la face libre du polariseur, c'est-à-dire opposée au substrat. Cette structure consiste en des reliefs réalisés sur toute la surface de la feuille polymère. Les dimensions de la structure sont en rapport avec la longueur d'onde de la lumière visible, de manière à créer des interférences par lesquelles les faisceaux de lumière réfléchie vont s'annuler. Cette solution est particulièrement avantageuse, car elle offre une grande efficacité alors que son coût de mise en oeuvre est faible. Ces structures sub-micrométriques proposent généralement des motifs périodiques dont la période est de 200 à 300 nanomètres, avec une profondeur de 60 à 150 nanomètres. Ces structures sont généralement faites de réseaux à une ou deux dimensions.

On pourrait également obtenir un effet anti-réfléchissant en évaporant une succession de couches minces avec une alternance d'indices différents. Cette solution, qui ne fait pas partie de la présente invention, est toutefois beaucoup plus coûteuse que la première solution proposée.

Un tel traitement anti-réfléchissant peut, de manière avantageuse, être également appliqué au substrat dans notre exemple, en quartz.

A titre d'exemple, un système polarisant comprenant deux polariseurs de l'état de la technique, tels que proposés aux figures 1 et 2, génère une perte en réflexion d'environ 16% pour un passage de la lumière au travers des deux polariseurs, soit 32% pour un allez retour.

Avec un même montage, mais en prenant deux polariseurs 8, 9 munis d'une structure sub-micrométrique anti-réfléchissante, disposés sur un substrat en quartz, la perte en réflexion n'est déjà que de 9% environ pour un passage de la lumière au travers des deux polariseurs et de 18% pour un aller-retour.

En couplant un système polarisant dans lequel chaque polariseur est disposé sur un substrat, dans notre exemple en quartz, et dans lequel chaque polariseur comporte une structure sub-micrométrique anti-réfléchissante sur sa face libre, et dans lequel le substrat comporte sur sa face libre, c'est-à-dire opposée au polariseur, une structure sub-micrométrique, alors, les pertes ne sont plus que de 4% pour un passage de la lumière au travers des deux polariseurs et de 8% pour un aller-retour de la lumière.

Ainsi, selon si on complète les polariseurs 8, 9 munis d'une structure sub-micrométrique, d'un substrat 12 en quartz également munis d'une telle structure, le gain en lumière est de 7 à 12% pour un passage de la lumière au travers de deux polariseurs et de 14 à 24% pour un allez retour, ce qui représente une amélioration de 43 à 75%, ce qui est évidemment considérable.

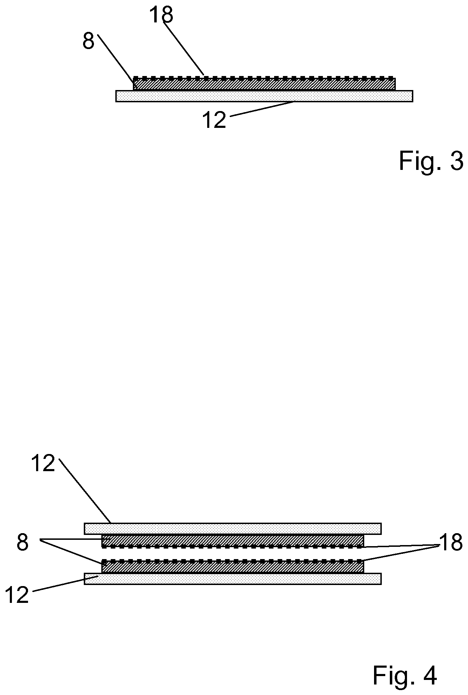

Dans le système polarisant de l'invention, les deux polariseurs se font face tandis que les substrats sont disposés au plus loin l'un de l'autre, comme sur la figure 4.

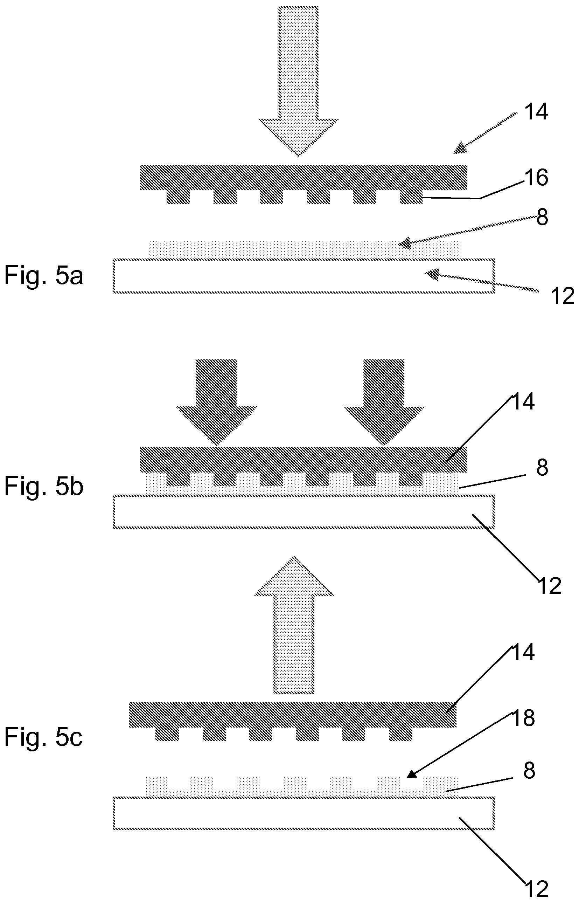

De plus, cette amélioration se fait sans imposer un surcoût rédhibitoire au polariseur. En effet, comme le montre la figure 5, le procédé de réalisation de l'ensemble formé par un polariseur 8 ou 9 et le substrat 12, dans notre exemple en quartz, permet de réaliser en une seule étape l'assemblage de ces deux éléments et la réalisation de la structure sub-micrométrique.

Plus particulièrement, la feuille polarisante est posée (fig. 5a) puis laminée (fig. 5b) sur le substrat 12, dans notre exemple, en quartz, par exemple sous une presse de moulage de moulage à chaud (hot embossing). La feuille polarisante est ainsi fixée directement sur le substrat. Le laminage et la structuration sont réalisés au moyen d'un outil 14 de pressage spécial, typiquement fait d'une plaque en nickel structurée. On a réalisé sur la face utile, c'est-à-dire la face de pressage de l'outil, un négatif 16 de la structure sub-micrométrique. Ainsi, lors du laminage, la pression exercée va à la fois coller la feuille polarisante sur le substrat et produire la structure sub-micrométrique 18 à la surface libre du polariseur. On retire ensuite l'outil (fig. 5c) pour laisser libre l'ensemble substrat et polariseur. Pour faciliter le démoulage, on peut préalablement au moulage préparer l'outil avec un démoulant.

L'homme du métier saura adapter les paramètres de moulage/pressage en fonction de la nature du matériau de la feuille polymère du polariseur. Ces paramètres sont généralement compris entre 60°C à 200°C pour la température et, pour la pression, entre 500kg et 5 tonnes.

Pour ce qui concerne la réalisation d'une structure anti-réfléchissante sur le substrat, celle-ci peut être moulée. Pour un substrat en quartz, on peut, par exemple, utiliser un processus de UV curing dans une fine couche de Sol-Gel déposée sur cette surface. L'outil nécessaire peut avantageusement être la même plaque en nickel utilisée pour le moulage à chaud de la feuille polarisante, ce qui est très intéressant en termes de coût. On peut aussi structurer cette surface de quartz par un transfert direct, en utilisant un procédé standard d'holographie diffractive et de gravure sèche. Si le substrat est un polymère, on peut encore utiliser la même technologie de moulage par pressage décrite ci-dessus pour structurer la feuille polarisante.

On obtient ainsi, grâce à des améliorations peu coûteuses, un système polarisant particulièrement performant, générant très peu de pertes de lumière. L'objet qui doit être vu au travers du polariseur, apparaît très clairement et peut être mis en valeur, même sans source de lumière interne.

## Revendications

1. Dispositif optique comprenant un premier (8) et un deuxième (9) polariseurs, réalisés dans une feuille de polymère, un dispositif permettant de déplacer les polariseurs l'un en référence à l'autre entre un premier état dans lequel les directions de polarisation des premier et deuxième polariseurs sont parallèles et un deuxième état dans lequel les directions de polarisation des premier et deuxième polariseurs sont perpendiculaires,
**caractérisé en ce que** chacun des deux polariseurs est disposé sur un substrat (12) ayant un indice de réfraction inférieur à 1.77 et **en ce que** les dits deux polariseurs comprennent chacun une structure sub-micrométrique (18) anti-réfléchissante réalisée directement dans la surface du polymère du polariseur, opposée au substrat (12), et **en ce que** les deux structures anti-réfléchissantes (18) sont positionnées face à face.

2. Dispositif selon la revendication 1, **caractérisé en ce que** les deux polariseurs ferment un boitier.

3. Dispositif selon l'une des revendications précédentes, **caractérisé en ce qu'**un au moins des substrats comporte, sur sa face libre, une structure sub-micrométrique à sa surface.

4. Dispositif selon la revendication 3, **caractérisé en ce que** chacun des substrats comporte une structure sub-micrométrique à sa surface.

5. Dispositif selon l'une des revendications 1 à 4, **caractérisé en ce que** la feuille polymère est fixée sur le substrat.

6. Dispositif selon la revendication 5, **caractérisé en ce que** la feuille polymère est fixée directement sur le substrat.

7. Dispositif selon la revendication 6, **caractérisé en ce que** la feuille polymère est fixée directement sur le substrat par une opération de laminage.

8. Dispositif selon l'une des revendications précédentes, **caractérisé en ce que** le substrat est réalisé en quartz.

9. Procédé de réalisation d'un dispositif optique selon l'une des revendications 1 à 8, comprenant
- un substrat (12) ayant un indice de réfraction inférieure à 1.77, et
- un premier (8) et un deuxième polariseur (9) réalisés dans une feuille polymère et comportant une structure sub-micrométrique anti-réfléchissante réalisée directement dans sa surface, le polariseur étant disposé sur le substrat,
**caractérisé en ce que** la fabrication de chacun desdits polariseurs (8,9) comprend les étapes suivantes :
- se doter dudit substrat (12),
- se doter d'un polariseur dépourvu de structure sub-micrométrique,
- superposer le polariseur au substrat,
- laminer à chaud le polariseur contre le substrat au moyen d'un outil (14) de pressage, dont la face utile comporte un négatif (16) de la structure sub-micrométrique à réaliser, de manière à réaliser simultanément la liaison du polariseur sur le substrat et le moulage de la structure sub-micrométrique dans le polariseur,
- démouler l'outil,
et **en ce que** l'on positionne les deux polariseurs (8,9) de telle façon à ce que les dites structures sub-micrométriques sont face à face.

10. Procédé selon la revendication 9, **caractérisé en ce qu'**il comporte une étape supplémentaire de réalisation d'une structure sub-micrométrique dans la face libre du substrat.

11. Procédé selon la revendication 10, **caractérisé en ce que** la réalisation de la structure sub-micrométrique dans la face libre du substrat se fait par moulage, par transfert direct ou par UV curing.

## Patentansprüche

1. Optische Vorrichtung mit einem ersten (8) und einem zweiten (9) Polarisator, die aus einer Polymerfolie ausgeführt sind, wobei eine Vorrichtung es ermöglicht, die Polarisatoren in Bezug aufeinander zwischen einem ersten Zustand, in dem die Polarisationsrichtungen der ersten und zweiten Polarisatoren parallel verlaufen, und einem zweiten Zustand, in dem die Polarisationsrichtungen der ersten und zweiten Polarisatoren senkrecht zueinander verlaufen, zu bewegen,
**dadurch gekennzeichnet, dass** jeder der beiden Polarisatoren auf einem Substrat (12) mit einem Brechungsindex von weniger als 1,77 angeordnet ist und dass die beiden Polarisatoren jeweils eine antireflektive submikrometrische Struktur (18) umfassen, die direkt in der Oberfläche des Polymers des Polarisators, entgegengesetzt zum Substrat (12), ausgeführt ist, und dass die beiden antireflektiven Strukturen (18) einander gegenüber angeordnet sind.

2. Vorrichtung nach Anspruch 1, **dadurch gekennzeichnet, dass** die beiden Polarisatoren ein Gehäuse schließen.

3. Vorrichtung nach einem der vorhergehenden Ansprüche, **dadurch gekennzeichnet, dass** mindestens eines der Substrate auf seiner freien Seite eine submikrometrische Struktur an seiner Oberfläche aufweist.

4. Vorrichtung nach Anspruch 3, **dadurch gekennzeichnet, dass** jedes der Substrate eine submikrometrische Struktur an seiner Oberfläche aufweist.

5. Vorrichtung nach einem der Ansprüche 1 bis 4, **dadurch gekennzeichnet, dass** die Polymerfolie auf dem Substrat fixiert ist.

6. Vorrichtung nach Anspruch 5, **dadurch gekennzeichnet, dass** die Polymerfolie direkt auf dem Substrat fixiert ist.

7. Vorrichtung nach Anspruch 6, **dadurch gekennzeichnet, dass** die Polymerfolie durch einen Walzvorgang direkt auf dem Substrat fixiert wird.

8. Vorrichtung nach einem der vorhergehenden Ansprüche, **dadurch gekennzeichnet, dass** das Substrat aus Quarz ausgeführt ist.

9. Verfahren zur Ausführung einer optischen Vorrichtung nach einem der Ansprüche 1 bis 8, umfassend
- ein Substrat (12) mit einem Brechungsindex von weniger als 1,77 und
- einen ersten (8) und einen zweiten (9) Polarisator, die aus einer Polymerfolie ausgeführt sind und eine antireflektive submikrometrische Struktur umfassen, die direkt in ihrer Oberfläche ausgeführt ist, wobei der Polarisator auf dem Substrat angeordnet ist,
**dadurch gekennzeichnet, dass** die Herstellung jedes der Polarisatoren (8, 9) die folgenden Schritte umfasst:
- Beschaffen des Substrats (12),
- Beschaffen eines Polarisators ohne mikrometrische Struktur,
- Auflegen des Polarisators auf das Substrat,
- Warmwalzen des Polarisators gegen das Substrat mittels eines Presswerkzeugs (14), dessen Nutzseite ein Negativ (16) der auszuführenden mikrometrischen Struktur aufweist, so dass gleichzeitig das Verbinden des Polarisators auf dem Substrat und das Abformen der submikrometrischen Struktur im Polarisator ausgeführt werden,
- Abheben des Werkzeugs,
und dadurch, dass die beiden Polarisatoren (8, 9) so positioniert werden, dass die submikrometrischen Strukturen einander gegenüber liegen.

10. Verfahren nach Anspruch 9, **dadurch gekennzeichnet, dass** es einen zusätzlichen Schritt der Ausführung einer mikrometrischen Struktur in der freien Seite des Substrats umfasst.

11. Verfahren nach Anspruch 10, **dadurch gekennzeichnet, dass** die Ausführung der submikrometrischen Struktur in der freien Seite des Substrats, durch Abformen, durch direkten Transfer oder durch UV Curing erfolgt.

## Claims

1. Optical device comprising a first polarizer (8) and a second polarizer (9), which are made from a sheet of polymer, a device making it possible to move the polarizers relative to one another between a first state in which the polarization directions of the first and second polarizers are parallel and a second state in which the polarization directions of the first and second polarizers are perpendicular,
**characterized in that** each of the two polarizers is positioned on a substrate (12) having a refractive index of less than 1.77 and **in that** said two polarizers each comprise an antireflective submicron structure (18) created directly in the surface of the polymer of the polarizer, opposite the substrate (12), and **in that** the two antireflective structures (18) are positioned facing each other.

2. Device according to Claim 1, **characterized in that** the two polarizers enclose a housing.

3. Device according to either of the preceding claims, **characterized in that** at least one of the substrates comprises, on its free face, a submicron structure at its surface.

4. Device according to Claim 3, **characterized in that** each of the substrates comprises a submicron structure at its surface.

5. Device according to one of Claims 1 to 4, **characterized in that** the polymer sheet is fastened to the substrate.

6. Device according to Claim 5, **characterized in that** the polymer sheet is fastened directly to the substrate.

7. Device according to Claim 6, **characterized in that** the polymer sheet is fastened directly to the substrate by a lamination operation.

8. Device according to one of the preceding claims, **characterized in that** the substrate is made of quartz.

9. Process for producing an optical device according to one of Claims 1 to 8, comprising
- a substrate (12) having a refractive index of less than 1.77, and
- a first polarizer (8) and a second polarizer (9) made from a polymer sheet and comprising an antireflective submicron structure created directly in its surface, the polarizer being positioned on the substrate,
**characterized in that** the manufacture of each of said polarizers (8, 9) comprises the following steps:
- providing said substrate (12),
- providing a polarizer devoid of submicron structure,
- superposing the polarizer on the substrate,
- hot lamination of the polarizer against the substrate by means of a pressing tool (14), the working face of which comprises a negative (16) of the submicron structure to be created, so as to simultaneously carry out the bonding of the polarizer to the substrate and the moulding of the submicron structure in the polarizer,
- demoulding the tool,
and **in that** the two polarizers (8, 9) are positioned so that said submicron structures are facing each other.

10. Process according to Claim 9, **characterized in that** it comprises an additional step of creating a submicron structure in the free face of the substrate.

11. Process according to Claim 10, **characterized in that** the creation of the submicron structure in the free face of the substrate is carried out by moulding, by direct transfer or by UV curing.
